(19) **Europäisches Patentamt**

**European Patent Office**

**Office européen des brevets**

(11) **EP 0 740 477 B1**

(12) **FASCICULE DE BREVET EUROPEEN**

(45) Date de publication et mention
de la délivrance du brevet:
**25.10.2000  Bulletin 2000/43**

(51) Int Cl.⁷: **H04N 9/31**, G02F 1/1335,
G02B 27/28

(21) Numéro de dépôt: **96400879.1**

(22) Date de dépôt: **24.04.1996**

(54) **Dispositif de séparation de polarisation et application à un système d'éclairement d'un écran à cristal liquide**

Vorrichtung zur Polarisationstrennung und Anwendung für ein Beleuchtungssystem eines Flüssigkristallschirms

Polarisation separation device and application to an illumination system of a liquid crystal screen

(84) Etats contractants désignés:
**DE FR GB**

(30) Priorité: **28.04.1995  FR 9505114**

(43) Date de publication de la demande:
**30.10.1996  Bulletin 1996/44**

(73) Titulaire: **THOMSON multimedia
92648 Boulogne Cédex (FR)**

(72) Inventeur: **Sarayeddine, Khaled
92050 Paris La Defense Cedex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
EP-A- 0 407 830      EP-A- 0 552 725
EP-A- 0 609 055      EP-A- 0 615 148
WO-A-92/09915        US-A- 5 381 278

• **PATENT ABSTRACTS OF JAPAN vol. 16, no. 500 (P-1437), 15 Octobre 1992 & JP-A-04 180052 (NIPPON SHEET GLASS)**
• **PATENT ABSTRACTS OF JAPAN vol. 16, no. 313 (P-1383), 9 Juillet 1992 & JP-A-04 088317 (SHARP)**
• **IBM TECHNICAL DISCLOSURE BULLETIN, vol. 36, no. 09b, Septembre 1993, pages 453-456, XP002009578 "Improved Liquid Crystal Display panel illumination"**
• **PATENT ABSTRACTS OF JAPAN vol. 17, no. 448 (P-1594), 17 Août 1993 & JP-A-05 100331 (TOSHIBA), 23 Avril 1993,**

**Description**

L'invention concerne un dispositif de séparations de polarisations et son application à un système d'éclairement d'un écran à cristal liquide et notamment un système permettant d'utiliser efficacement les deux polarisations d'une source d'éclairement non polarisée.

L'émergence de la technologie des écrans à cristaux liquides offre un excellent débouché pour les techniques de projection vidéo. La lumière émise par une lampe à arc est modulée par une cellule à cristaux liquides. L'image formée par le dispositif d'affichage à cristaux liquides est projetée par un système optique sur un écran. La technique dite AM-TFT TNLCD (c'est-à-dire affichage à cristal liquide nématique à torsion commandé par une matrice active de transistors en film mince) est considérée comme essentielle pour les écrans à cristaux liquides, chaque élément image (pixel) étant contrôlée par un transistor. La lumière incidente sur l'écran à cristal liquide doit être polarisée linéairement. L'inconvénient majeur de cette technique est son faible rendement.

En fait, 1 à 2 % de la lumière atteint l'écran. 3 paramètres principaux limitent ce rendement, à savoir:

1 - Plus de 50 % de la lumière est perdue (-60 %) car la lumière provenant de la lampe n'est pas polarisée.

2 - Le facteur de remplissage de la cellule est limité, notamment pour la définition d'une grande image et le petit diamètre du modulateur à cristal liquide. Le facteur de remplissage ou OAR (pour Open Aperture Ratio, c'est-à-dire Rapport d'ouverture) avoisine les 50 %.

3 - Comme la lampe n'est pas petite, l'éclairage du petit diamètre de l'affichage à cristal liquide LCD (le faisceau lumineux étant supporté par l'angle solide adapté au contraste de l'affichage LCD) diminue le rendement lumineux. les écrans d'un format 16:9 présentent un rendement lumineux inférieur à 40 %.

D'autres facteurs génèrent une atténuation, comme le rendu de couleurs, l'équilibrage des blancs et les pertes de Fresnel.

De nombreuses solutions ont été proposées afin d'améliorer le rendement lumineux de ces systèmes de projection. Certaines solutions proposent la conversion de la seconde polarisation (voir par exemple le document "Large Aperture Polarized Light Source and Novel Liquid Crystal Display Operating Modes" S.V. Belayev, M. Schadt, M.l. Barnik, J. Fünufschilling, N.V. Malimoneko and K Schmitt. Japanese Journal of Applied Physics, Vol. 29, April 1990, pp. L634-L637) dans le boîtier d'éclairage, et d'autres préconisent l'utilisation de microlentilles destinées à concentrer la lumière dans la zone active des pixels de l'écran (voir par exemple le document "Brigtness Enhancement of an LCD Projection by Planar Microlens Array" H. Hamada, F. Funada, M. Hijikigawa, K. Awane, SID 92 DIGEST, pp. 269-272).

L'invention concerne un convertisseur par polarisation performant, pouvant être combiné à des microlentilles conventionnelles de manière à obtenir un projecteur à haut rendement, caractérisé par des performances supérieures pouvant atteindre un facteur 3 par rapport à un système conventionnel.

Pour illustrer les diverses améliorations apportées aux systèmes proposés, nous nous sommes basés sur l'étendue géométrique utile ou analyse de l'étendue.

La valeur de l'étendue d'un faisceau lumineux au travers d'une surface S est le produit de ladite surface par l'angle solide supportant le faisceau lumineux :

$$E \ (mm^2.str) = S. \ (surface \ circulaire). \ \Omega$$

où :

$$\Omega = 2.\pi[1 - \cos(\beta)]$$

et $\beta$ étant la demi-ouverture d'éclairage.

La lampe utilisée dans le système d'affichage par projection à cristaux liquides présente une extension spatiale (c'est-à-dire extension spatiale non nulle) ; elle peut être caractérisée par son étendue : $E_{lamp}$ ou Flux (Flux = E (Etendue) $*$ (L(Luminance) si L est constant.

D'autre part le contraste de l'affichage à cristal liquide LCD est largement dépendant de l'ouverture d'éclairage. Si $\beta < \pm 10$ deg, le contraste sera toujours acceptable pour la projection. Ainsi, $\Omega$ est limité à une valeur $\Omega 1$. Ladite limitation est également liée à la lentille de l'objectif utilisée pour la projection.

Par ailleurs, des écrans à cristaux liquides présentant un diamètre assez réduit ont été choisis afin de diminuer le coût desdits systèmes et de leurs composants optiques, d'où une surface d'éclairage S1 réduite.

Si le produit S1 par $\Omega 1$, c'est-à-dire E1, est inférieur à $E_{lamp}$, le rendement lumineux sera médiocre et égal au rapport $E1/E_{lamp}$.

Si E1 est supérieur, $E_{lamp}$, c'est-à-dire le rendement lumineux sera égal à 100 %.

Si E1 est égal à $E_{lamp}$, le système sera optimisé de manière satisfaisante.

Le système de conversion par polarisation double la valeur de l'étendue E car la lumière des deux composantes de polarisation est spatialement scindée dans deux directions.

Après avoir traversé le diviseur de polarisations, la lumière E devient 2E. A ce stade, 2 cas sont envisageables :

$2E = (2S).\Omega$ ce qui n'est pas acceptable en raison de problèmes, d'homogénéité et d'espace.

$2E = S.(2\Omega)$ : les techniques actuelles démontrent que de nombreux systèmes n'atteignent pas cette valeur minimale (soit $2\Omega$), mais davantage.

L'analyse de l'étendue peut être appliquée à la méthode de focalisation de la lumière dans les pixels de l'écran à cristal liquide. Pour la focalisation conventionnelle par une matrice de microlentilles sphériques : une microlentille pour chaque pixel pour une focalisation à 100 % : d'où la nécessité d'obtenir un facteur de remplissage de 100 % et non plus de 50 % (ou moins) ; en effet :

la zone de focalisation est inférieure ou égale à la zone active du pixel c'est-à-dire :

$$2.f.tg\ (\beta_{verre}) \leq \text{surface active}$$

où:

- surface active du pixel étant égale à la surface du pixel diminuée de la matrice noire (matrice de masquage) : dimension du pixel -matrice noire
- $f$ est l'épaisseur de l'écran à cristaux liquide
- $\beta$ verre, le demi-angle d'éclairage à l'intérieur du verre de l'affichage LCD.

Nous connaissons les paramètres du système : $f$, $\beta_{verre}$, taille et dimension de l'affichage LCD ; il est ainsi possible de définir la quantité de lumière traversant l'écran après focalisation.

E focalisation = S (surface circulaire à la périphérie de l'affichage LCD). $2.\pi[1-\cos(n.\beta verre)$

$n$ : indice de réfraction du verre de l'affichage LCD.

Comme préalablement mentionné, le rendement total est le rapport de focalisation E sur $E_{lamp}$.

Les systèmes d'éclairage conventionnels dotés de dispositifs de conversion par polarisation ou de focalisation ne peuvent être réellement utilisés à cause de l'extension de la valeur d'étendue caractéristique du convertisseur par polarisation par exemple, ce qui annule l'avantage de la focalisation, même si la lampe présente une étendue géométrique restreinte. On a proposé dans le brevet EP 0 552 725 un dispositif de séparation de polarisation pouvant résoudre en partie ce problème. Toutefois, ce système n'est pas compact et allonge le chemin optique de certains faisceaux.

L'invention permet de résoudre l'ensemble des problèmes ci-dessus.

L'invention concerne donc un dispositif de séparation de polarisations et application à un système d'éclairement d'un écran à cristal liquide comprenant :

un double prisme constitué par un premier prisme et un second prisme comportant des faces en regard et un séparateur de polarisation, le premier prisme présentant une face d'entrée recevant un faisceau de lumière non-polarisée, ledit séparateur de polarisation transmettant la lumière polarisée selon un premier sens de polarisation et réfléchissant la lumière polarisée selon un deuxième sens de polarisation, caractérisé en ce que le second prisme comporte une face de réflexion munie d'un miroir recevant la lumière polarisée selon le deuxième sens de polarisation et réfléchie par le séparateur de polarisation, les premier et second prismes étant positionnés mutuellement pour fonctionner sur le principe de la réflexion totale interne et comportant une face de sortie transmettant la lumière transmise par le séparateur de polarisation et la lumière réfléchie par le miroir.

Les différentes objets et caractéristiques de l'invention apparaîtront plus clairement dans la description qui va suivre et dans les figures annexées qui représentent :

- les figures 1a à 1f, des moyens de réalisation du système de polarisation de la lumière utilisant un filtre cholestérique ;
- la figure 2, un système d'éclairement appliquant des dispositifs de polarisation tel que celui de la figure 5c ;
- la figure 3, un mode de réalisation du système de la figure 8;
- les figures 4a et 4b, un système d'éclairement comportant un dispositif holographique de séparation de polarisations ;
- les figures 5a et 5b, un exemple de réalisation simplifié du système selon l'invention ;
- les figures 6a et 6b, une variante de réalisation du système des figures 5a et 5b ;
- les figures 7a et 7b, des moyens de centrage de la lumière par rapport à la normale au plan de l'écran ;
- la figure 8, un exemple de réalisation du système de l'invention dans lequel une microlentille permet d'éclairer quatre éléments images de l'écran ;
- les figures 9a à 9c, des agencements d'éléments images de l'écran ;
- la figure 10, une organisation générale du système de l'invention ;
- les figures 11 et 12, des exemples de dispositions et de formes de lentilles d'éclairement de l'écran à cristal liquide.

On va donc décrire différents systèmes particuliers de polarisation de lumière.

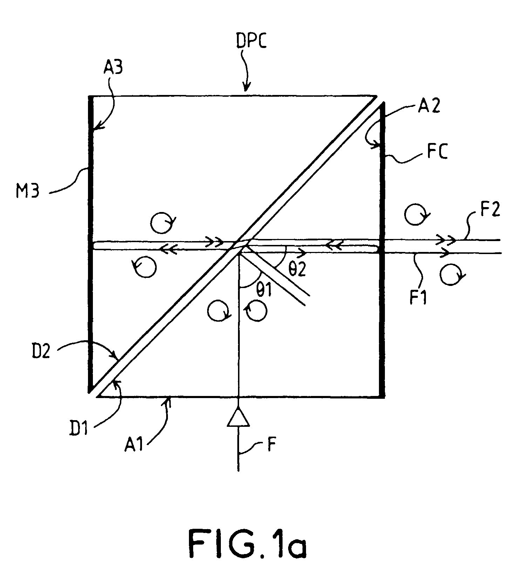

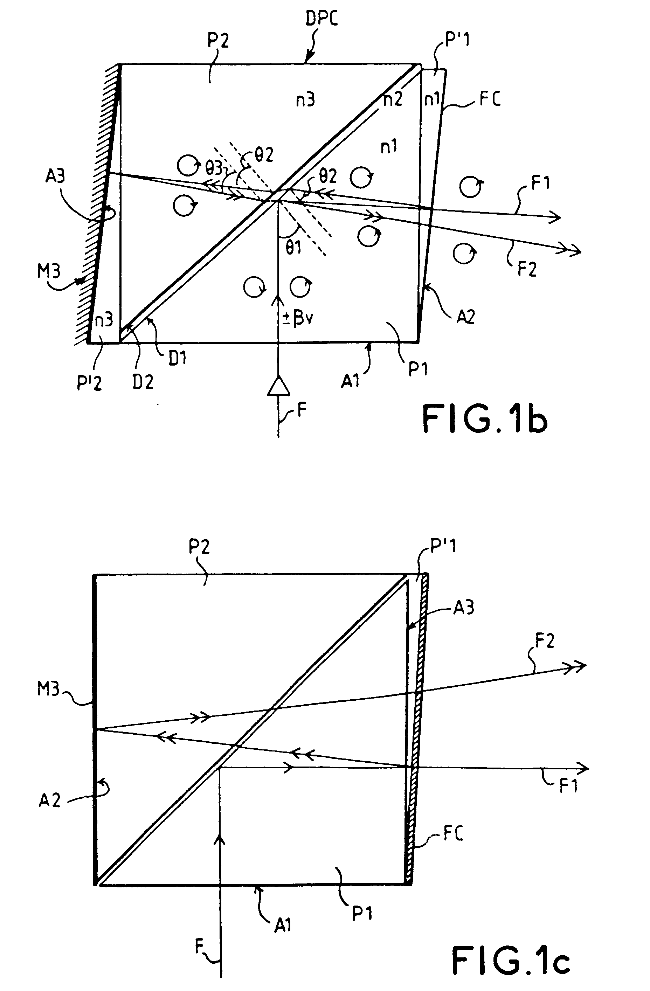

Les figures 1a à 1e représentent des systèmes selon l'invention dans lesquels un double prisme DPC remplit les fonctions de séparation de polarisations, de rotation de polarisation, et de recombinaison des faisceaux en direction de l'écran à cristal liquide.

Ce système est basé sur le principe de réflexion interne totale en vue de la combinaison des deux faisceaux. Le double prisme DPC de la figure 1a comporte une face d'entrée A1 d'un faisceau incident F, une face de sortie A2 à laquelle est associé un filtre de polarisations tel qu'un filtre cholestérique, et une face de réflexion A3 à laquelle est associé un miroir M3. Le faisceau F non polarisé est totalement réfléchi par le premier dioptre D1 verre/air. 50 % de l'intensité du faisceau est transmise pour la polarisation circulaire droite (par exemple), et 50 % est réfléchie par le filtre cholestérique FC, puis devient incidente au droit du dioptre verre/air D1, avec un angle d'incidence θ2 de sorte que θ2 soit inférieur à cet angle critique.

Le faisceau est ensuite transmis jusqu'à sa réflexion sur le miroir M3 (surface métallisée). A la réflexion, le sens de polarisation s'inverse de droite à gauche. Puis ce faisceau traverse le dioptre verre/air D2 dans les mêmes conditions que celles préalablement évoquées, ainsi que le filtre cholestérique FC car la polarisation est maintenant convenablement orientée.

La figure 1b représente un exemple de réalisation permettant de fournir deux faisceaux de sortie F1 et F2 faisant un angle β entre eux. Pour cela, le filtre cholestérique FC et le miroir M3 ne sont pas parallèles entre eux. Selon l'exemple de la figure 1b, on a prévu d'incliner le filtre FC par rapport à une face du prisme P1 et le miroir M3 par rapport à une face du prisme P2. Les inclinaisons sont données par des prismes supplémentaires P'1 et P'2. On peut fabriquer un prisme qui soit l'équivalent des prismes P1 et P'1 et un autre prisme qui soit l'équivalent des prismes P2 et P'2.

On peut également ne prévoir qu'un prisme supplémentaire P'1, par exemple, comme cela est représenté sur la figure 1c. L'important est alors que le plan du filtre cholestérique FC ne soit pas parallèle au plan du miroir M3.

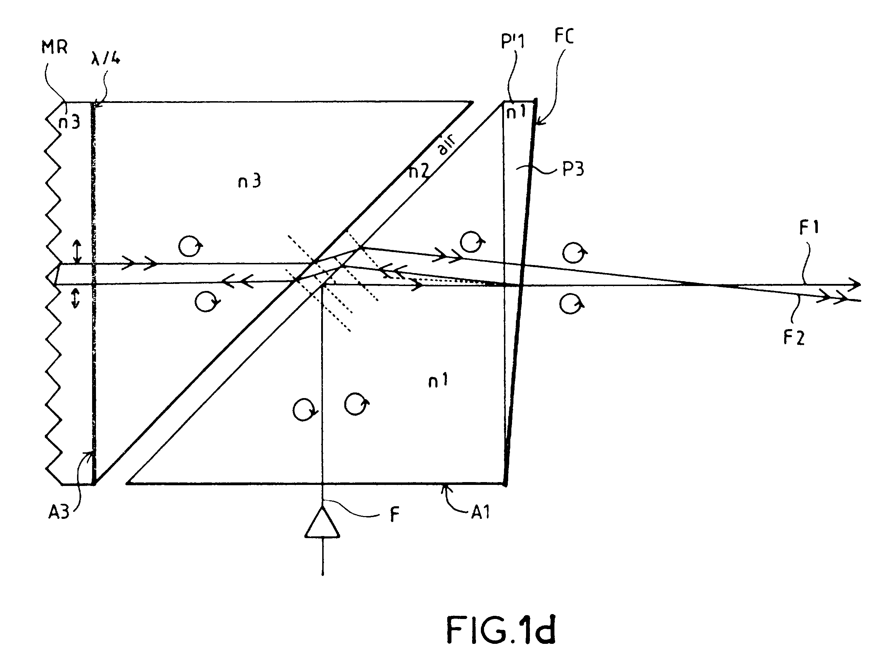

La figure 1d représente un autre système de conversion par polarisation basé sur des filtres cholestériques. Il est intéressant de remplacer le miroir M3 par un rétroréflecteur MR et une lame λ/4 pour orienter le plan de polarisation de la lumière incidente. Le rétroréflecteur (à 90 degrés) est pratique car la lumière incidente réfléchie sur le rétroréflecteur est parallèle.

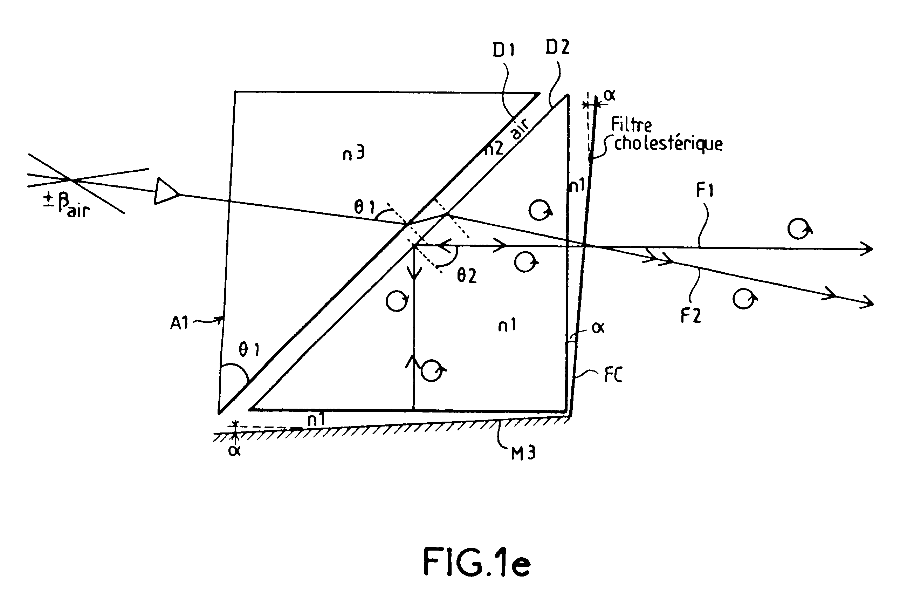

La figure 1e représente un autre système de conversion par polarisation basé sur l'utilisation de filtres cholestériques. Par rapport aux figures précédentes, la lumière non polarisée est totalement transmise au travers de deux interfaces D1, D2 verre/air. Le faisceau est ensuite scindé en deux parties : 50 % de la lumière polarisée circulaire est transmise, l'autre partie est réfléchie. L'angle d'incidence sur le filtre cholestérique FC est tel que la lumière réfléchie est totalement réfléchie en interne, au droit de l'interface verre/air. Ce faisceau est à nouveau réfléchi sur le miroir M3 (à une incidence pratiquement nulle) et voit sa polarisation inversée, puis est réfléchi par le dioptre D2 vers le filtre FC. Le dispositif DPC fournit ainsi deux faisceaux de même polarisation. L'angle entre les faisceaux F1 et F2 est donné par le fait que le filtre FC n'est pas perpendiculaire au miroir M3.

Pour obtenir un angle entre les faisceaux F1, F2 on prévoit sur la figure 1e, d'incliner le filtre cholestérique FC par rapport à l'axe optique du système (par rapport au faisceau F). Ainsi, le faisceau réfléchi par le filtre FC est incliné par rapport au faisceau F et donc par rapport à F1. Cette inclinaison peut être prévue en prévoyant un prisme auxiliaire P'1.

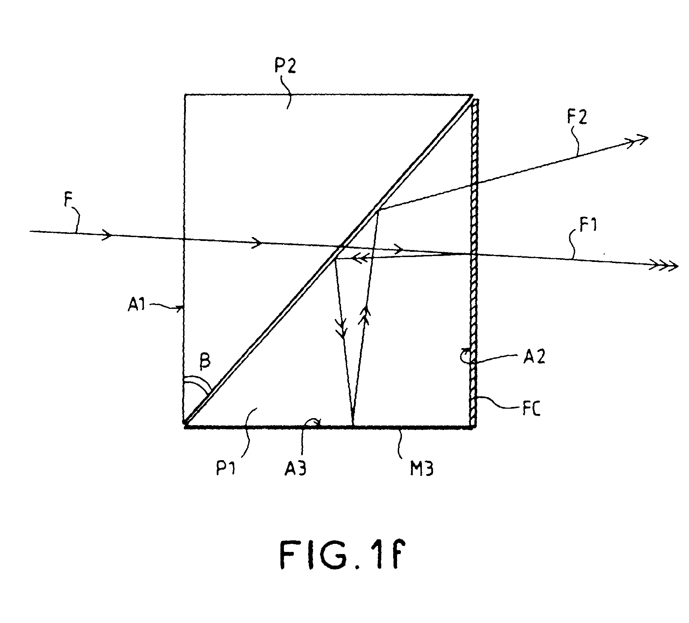

La figure 1f représente une variante de réalisation du système de la figure 1e dans lequel les deux prismes P1 et P2 ne sont pas isocèles. Selon cette figure, la face d'entrée A1 du prisme P2 fait avec l'hypoténuse des prismes, un angle β inférieur à 45°. L'une des polarisations est transmise selon le faisceau F1 par le filtre FC. L'autre polarisation est réfléchie par le filtre FC, le dioptre de séparation des deux prismes et le miroir M3 pour donner le faisceau F2. Le faisceau F2 fait alors un angle avec le faisceau F1. Pour des questions d'angles critiques de réflexion aux interfaces entre prisme, on peut prévoir d'incliner la direction du faisceau F par rapport à la face A1.

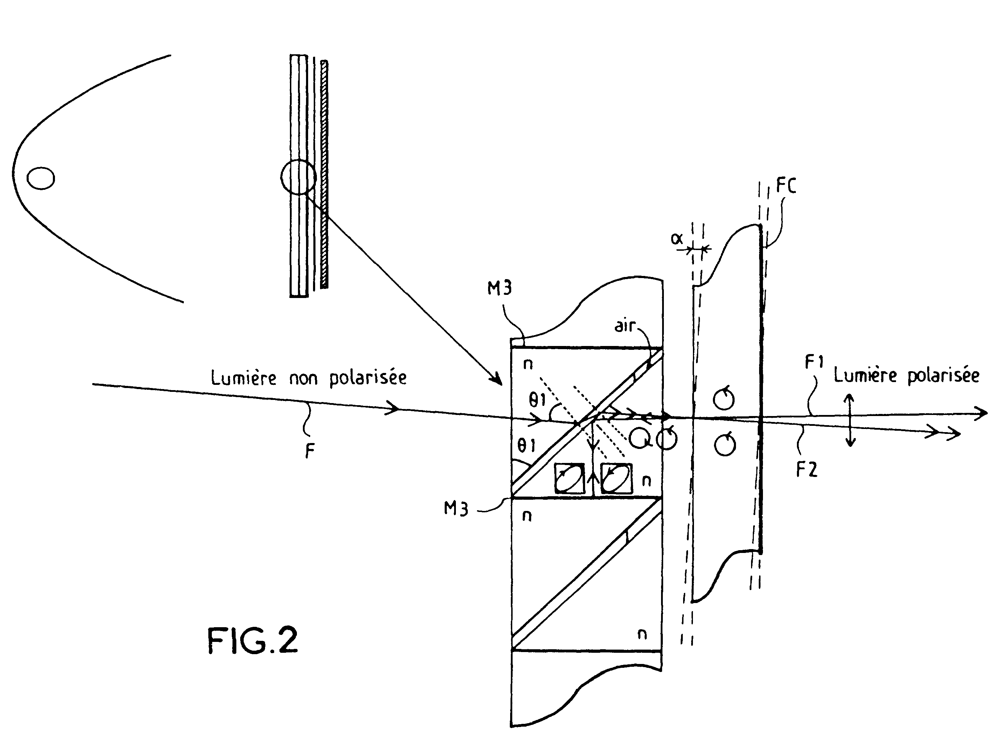

Ce système peut être appliqué au système de projection par l'intermédiaire de deux "gros" prismes. Toutefois, il est possible de concevoir un convertisseur par polarisation assez mince en constituant un ensemble de plusieurs petits systèmes de conversion par polarisation comme représenté sur la figure 2. De cette manière, nous obtenons le convertisseur par polarisation présentant une épaisseur plus faible. Le principe de fonctionnement est identique à celui déjà évoqué cidessus notamment en relation avec la figure 1e (dans ce cas le filtre FC est incliné d'un angle a par rapport aux faces de sortie des prismes) ou en relation avec la figure 1f. La lumière circulaire polarisée (à droite par exemple) est réfléchie :

La réflexion interne totale introduit un décalage de phases à entre les composantes s et p.

La réflexion sur le miroir M3 introduit un décalage de phases π.

La réflexion interne totale introduit à nouveau un décalage de phase -δ entre les composantes s & p.

Ainsi, le décalage de phase totale est π. La lumière circulaire polarisée à droite devient une lumière circulaire polarisée à gauche.

Ce système miniaturisé présente plusieurs avantages.

- Si l'on adapte le convertisseur par polarisation miniaturisé à l'affichage à cristaux liquides (avec polariseur et analyseur), nous évitons toutes pertes et améliorons le rendement lumineux d'un facteur d'environ 2.

- Le système de prismes peut être mince et facile à fabriquer. Il peut être composé d'un matériau transparent moulé (verre ou acrylique).

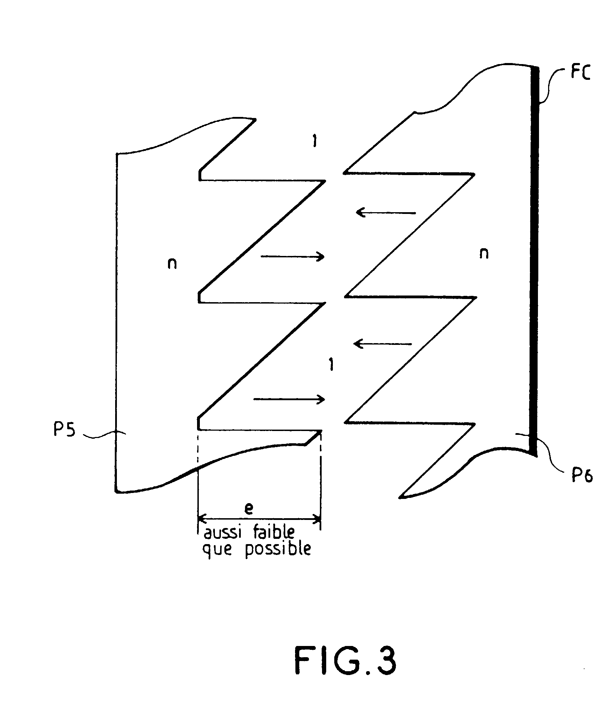

Pour cela, on dispose de deux plaques P5, P6 (en verre) dentelées de formes complémentaires de façon à reconstituer les prismes de la figure 3. Chaque dent possède par exemple une première face perpendiculaire au plan des plaques et une deuxième face inclinée sensiblement à 45°. La première face est métallisée pour constituer le miroir M3.

La plaque P6 possède sur sa face plane le filtre cholestérique FC.

Les deux plaques P5, P6 sont ensuite emboîtées l'une dans l'autre.

Le système de prismes peut être agencé le long de deux directions possibles : l'une le long du côté long de l'affichage LCD, et l'autre le long du côté court. Dans le cas des affichages LCD de type AM courants, où le contraste est supérieur pour l'angle d'éclairage le long du côté le plus long de l'affichage LCD, il est clair que le système doit être installé selon la direction du côté court de l'écran à cristal liquide.

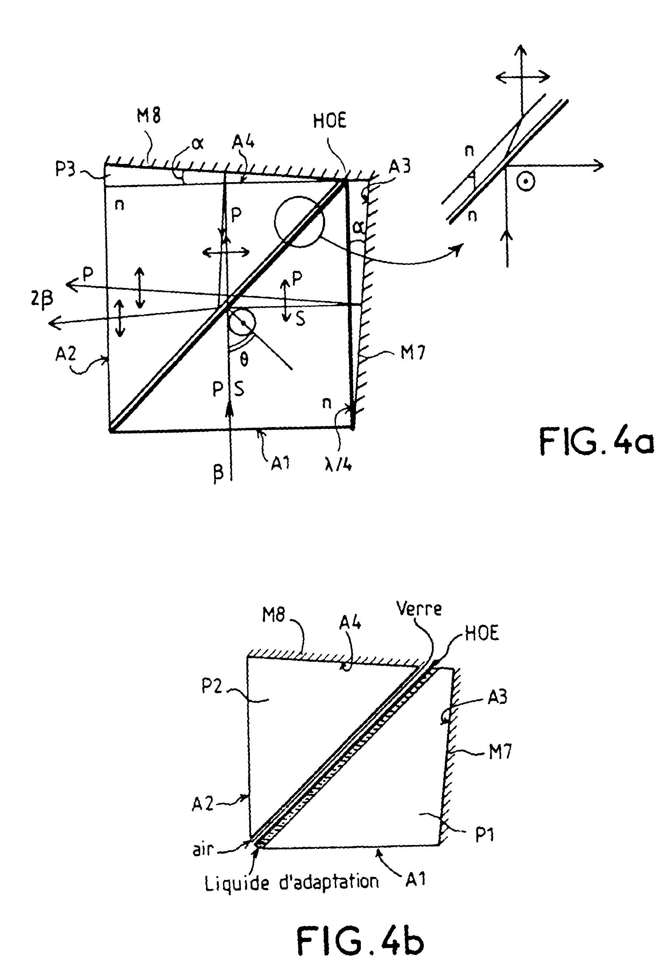

La figure 4a représente une variante selon laquelle le filtre cholestérique est placé entre les deux faces communes des deux prismes. Dans cette variante, le filtre cholestérique peut être remplacé par une variante utilisant un élément holographique HOE. L'élément optique holographique constitué d'un élément diffractant à volume de phase peut assurer une fonction optique efficace lorsqu'il est réalisé dans un film assez mince (d'environ 10 μm). Ces composants sont moins onéreux, légers et peuvent être combinés à une autre fonction optique.

La fonction de séparation de polarisations est obtenue en enregistrant les figures d'interférences de deux ondes planes cohérentes dans un matériau photosensible à film mince. La variation de l'indice induit (dn) à l'intérieur du matériau est importante. Les variations de l'indice d'enregistrement permettent de réaliser une fonction miroir pour une composante de polarisation (conditions de Brewster à 45 degrés), la seconde composante de polarisation étant totalement transmise.

La figure 4b représente un mode de réalisation du dispositif de la figure 4a. Le séparateur holographique HOE est réalisé sur une plaque de verre et est collé sur la face hypoténuse du prisme P1. Les prismes P1 et P2 sont réalisés chacun en une seule pièce avec leurs faces M7, M8 métallisées.

Ce type de composant est couramment employé pour différentes couleurs (c'est-à-dire une largeur de bande limitée).

Ce système de conversion de l'invention de polarisations est donc basé sur un polariseur optique holographique très compact. Ce dernier pourra être utilisé dans un système de projection pour la lumière blanche ou pour chaque couleur.

La lumière non polarisée (blanche ou monochrome) est incidente sur le polariseur HOE. La lumière polarisée selon une direction "S" est totalement réfléchie. La lumière polarisée perpendiculairement "p" n'est pas diffractée et traverse le polariseur HOE (adapté à l'hypoténuse du prisme). En raison de l'angle incident, θ est inférieur à l'angle critique [θc = arsin (1/n). La composante "p" est ensuite transmise deux fois sur la limite HOE/air et air/verre. Cette composante "p" est réfléchie par le miroir incliné, M8 puis par le phénomène de réflexion interne totale (TIR). La composante "s" réfléchie par le polariseur HOE traverse deux fois une lame de λ/4 et est réfléchie sur le miroir incliné M7. Ensuite, le faisceau polarisé de type "s" devient un faisceau polarisé de type "p". Ce faisceau devient à nouveau incident sur le polariseur HOE, puis est transmis totalement : tout d'abord par le HOE, puis par les limites HOE/air et air/verre.

De cette manière, la lumière est totalement polarisée. Cette méthode présente plusieurs avantages, à savoir :

- les deux chemins optiques sont égaux, donc aucun problème d'uniformité lors de l'éclairage de l'affichage LCD ;
- grâce au diviseur de faisceau de polarisation holographique actuellement utilisé pour chaque couleur, il est possible de concevoir un convertisseur de polarisations pour chaque canal d'un système à trois LCD, sans trop augmenter la compacité du système de projection ;
- la polarisation p traversant les dioptres verre-air et air-verre n'est pratiquement pas atténuée. Ceci limite les pertes de Fresnel du système au minimum.

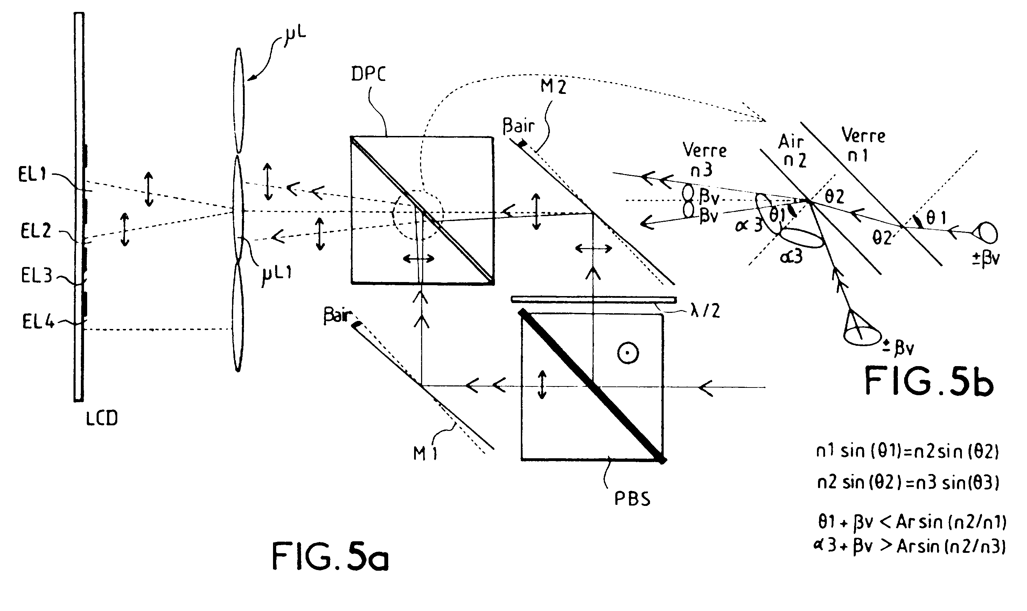

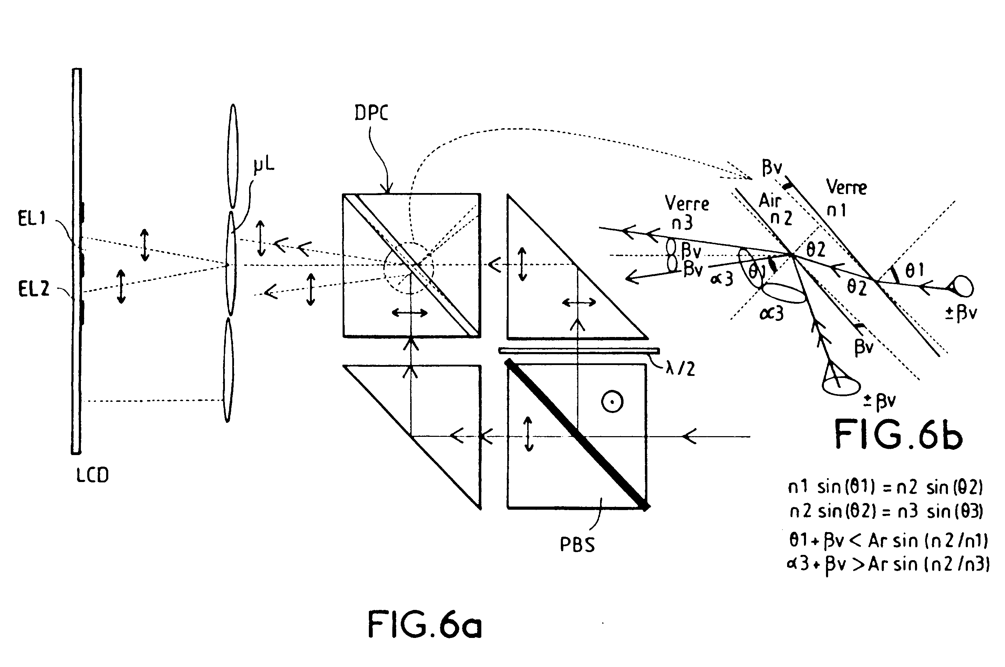

En se reportant aux figures 5a, 5b, 6a, 6b, on va maintenant décrire une application du système de l'invention à l'éclairement d'un écran à cristal liquide.

La lumière est incidente sur l'affichage à cristaux liquides LCD par l'intermédiaire d'une matrice de microlentilles μL. Ces microlentilles peuvent être sphériques ou cylindriques. Une microlentille couvre au moins deux pixels. Il est alors prévu de diriger un faisceau vers un pixel, et le second vers l'autre pixel. Par exemple, le faisceau F1 transmis par la microlentille μL1 éclaire le pixel EL1 et le faisceau F2 éclaire le pixel EL2. Suivant cette méthode, la totalité de la lumière traverse l'afficheur à cristaux liquides, d'où des résultats optimaux.

Nous obtenons réellement une onde 2 Ω pour une surface de sensiblement 1S, ce qui signifie que nous atteignons une valeur minimale de l'étendue.

La figure 6 représente un système selon l'invention dans lequel l'un des éléments tel que le miroir M3 est orientable.

Nous savons que le faisceau lumineux provenant de la source lumineuse n'est pas collimaté, mais qu'il présente une ouverture d'éclairage de ± β/air. Ainsi, pour la combinaison, il convient de respecter les conditions relatives à l'angle critique β et à l'angle incliné.

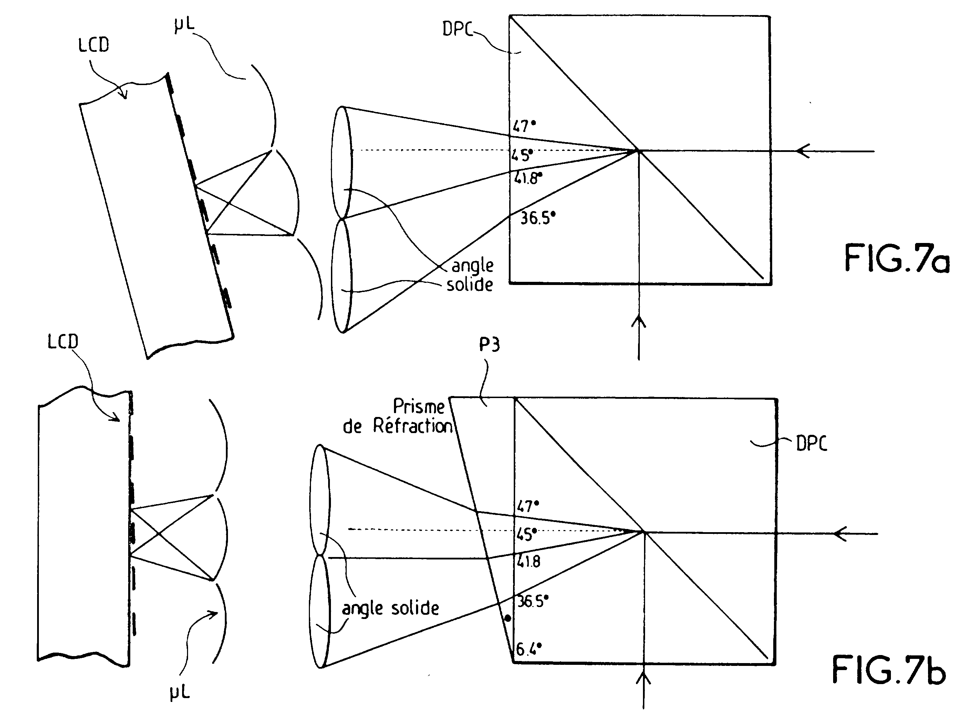

Les figures 7a et 7b représentent un exemple ou le verre présente un indice 1.5168 (BK7). La lumière émise par le double prisme n'est pas centrée sur la normale à la face de sortie du double prisme. Dans ce cas, il est possible d'éclairer directement l'écran à cristaux liquides (figures 7a) en inclinant celui-ci ou en prévoyant un prisme de sortie P3 (figure 7b) de manière à diffracter le faisceau lumineux puis à centrer la lumière d'éclairement de l'écran à cristaux liquides.

Pour centrer l'éclairage émis, il est nécessaire de prévoir un indice de réfraction assez faible (n = 1.4) pour le double prisme. Toutefois, cet indice n'est pas indispensable et induit des coûts élevés.

Le rendement d'un tel convertisseur avec filtre cholestérique par rapport à un système conventionnel est le suivant :

Gain = [R + T]/T polariseur
* Pour un séparateur de polarisations (PBS classique à multicouches) présentant des coefficients de réflexion R = 0,99 et de transmission T = 0,95, on a (figure 2b)
R = 0.5x0.99x1x0.86x0.98 = 0.416
T = 0.5x0.95x1x0.94x1x0.98 = 0.437
Gain = [0.416+0.437]/0.41 = ∼ 2.1 sans polariseur
Gain = [0.416+0.437]x[0.82/0.41] = ∼ 1.7 avec polariseur
* Pour un filtre cholestérique ayant R = 0.96 et T = 0.96 on a :
R = [0.86/2]x0.96x0.98x0.98x0.9 = 0.356
T=[0.86/2]x0.96x0.98x0.98 = 0.404
Gain = [0.356+0.440]x[(0.82x0.93)/0.41] = ∼ 1.32 avec polariseur

Les deux calculs ont été réalisés sur la base des paramètres suivants :

- Revêtement antireflet de 0.98 pour les prismes et pour le double prisme ;
- Réflexion totale R = 1;
- Transmission du double prisme 0.86 ;
- Transmission du polariseur: 0,41 ;
- Transmission de l'analyseur : 0,82 ;
- Réflexion du miroir M3 = 0,9 ;
- Polarisabilité du filtre cholestérique = 0.93 ;
- La transmission de la lame de rotation de polarisation $\lambda$ est prise égale à 94 %.

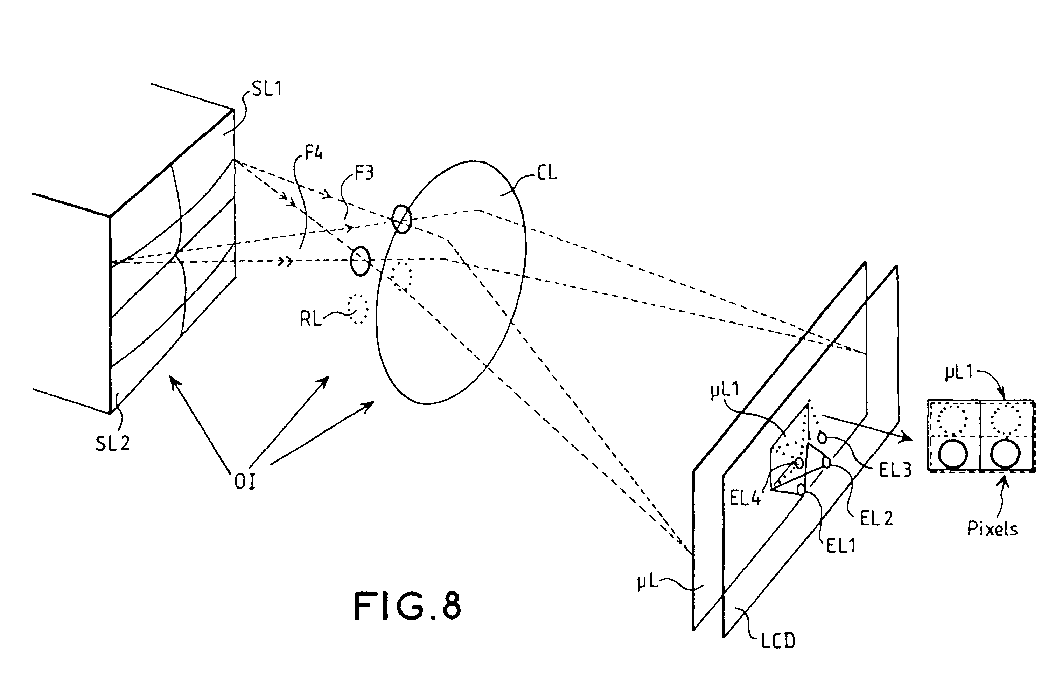

En se reportant à la figure 8, on va maintenant décrire un exemple de réalisation de l'invention dans lequel chaque microlentille permet d'éclairer quatre pixels.

Le système possède deux lentilles SL1, SL2 recevant les deux faisceaux séparés angulairement et fournis par le système de séparation de faisceaux décrit précédemment. Par exemple, ces deux faisceaux sont fournis par le double prisme DPC des figures 5a et 6a.

La lentille SL1 fournit deux faisceaux F3 et F4. La lentille SL2 fournit deux faisceaux F5 et F6 non représentés et similaires aux figures F3 et F4. Ces différents faisceaux sont intégrés par quatre lentilles relais RL et une lentille de collection CL de façon à ce que chaque faisceau se superpose sur la surface de la matrice de microlentille $\mu$L. Ces différents faisceaux sont incidents sur la surface de $\mu$L selon des angles d'incidence différents. Chaque microlentille $\mu$L1 focalise un faisceau dans un pixel EL1 à EL4. Ainsi chaque microlentille $\mu$L1 permet d'éclairer quatre pixels de l'écran LCD.

L'écran à cristaux liquides reçoit donc deux faisceaux principaux F1, F2 polarisés de la même façon, chacun étant focalisé par les microlentilles sur la moitié des pixels (sur chaque ligne par exemple). A l'intérieur de chaque pixel, la focalisation dépend uniquement de l'ouverture d'éclairage de la lampe. Elle ne présente donc aucune différence si l'on fait abstraction du système de polarisation.

Toutefois, les conditions de focalisation optimale sont les suivantes :

Pour chaque pixel, la focalisation est légèrement décalée par rapport à l'axe.

Pour disposer d'un système optimisé, il est donc nécessaire de respecter les conditions ci-après :

Arctg (p/f) $\geq \beta$ verre
p est le pas horizontal de l'affichage à cristaux liquides (voir figure 6a).
f est la longueur focale de chaque microlentille dans l'épaisseur du verre ou de l'affichage à cristaux liquides.

Si cette condition n'est pas remplie (par exemple, si le pas est trop petit ou trop grand), il est possible de modifier l'épaisseur de l'affichage.

Si l'ouverture d'éclairage $\beta$ est trop importante, le recombineur pourra servir de filtre angulaire. En effet, si le convertisseur par polarisation est conçu de manière à obtenir $\pm \beta$ deg dans l'air par exemple et que la valeur d'étendue de la lampe varie (au cours de sa durée de vie ou suite à son changement), tous les faisceaux d'angle supérieurs à $\beta$, seront transmis pour un bras uniquement (pas de réflexion totale interne), puis réfléchis pour le second bras et non pas transmis dans leur totalité. De cette manière, le boîtier d'éclairage est un filtre angulaire. Nous pouvons ainsi utiliser une source lumineuse plus étendue sans affecter le contraste de l'affichage à cristaux liquides.

La source lumineuse peut être étendue selon la plus grande dimension de l'écran à cristal liquide, par exemple selon dimension 16 pour un écran 16x9. Les microlentilles peuvent être cylindriques (focalisation le long de l'axe 16) ou sphériques. Dans ce dernier cas, le gain du flux lumineux est supérieur. Les microlentilles peuvent être réalisées suivant l'art antérieur.

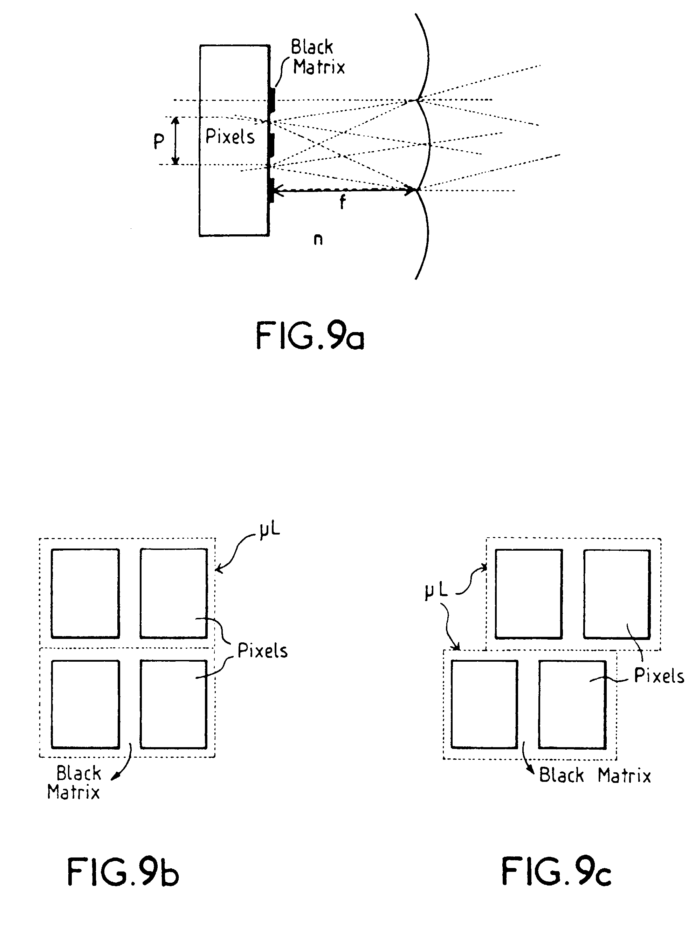

Il n'existe aucune restriction quant à l'agencement des pixels (figures 9b, 9c). Par exemple, selon la figure 9b, les pixels peuvent être arrangés en lignes et colonnes. Quatre pixels peuvent être éclairés par une seule lentille $\mu$L, selon le système d'éclairement de la figure 8, ou bien chaque groupe de deux pixels peut éclairer une lentille. Selon la figure 6c, les lignes de pixels sont décalées les unes par rapport aux autres. Chaque groupe de deux pixels est éclairé par une lentille $\mu$L.

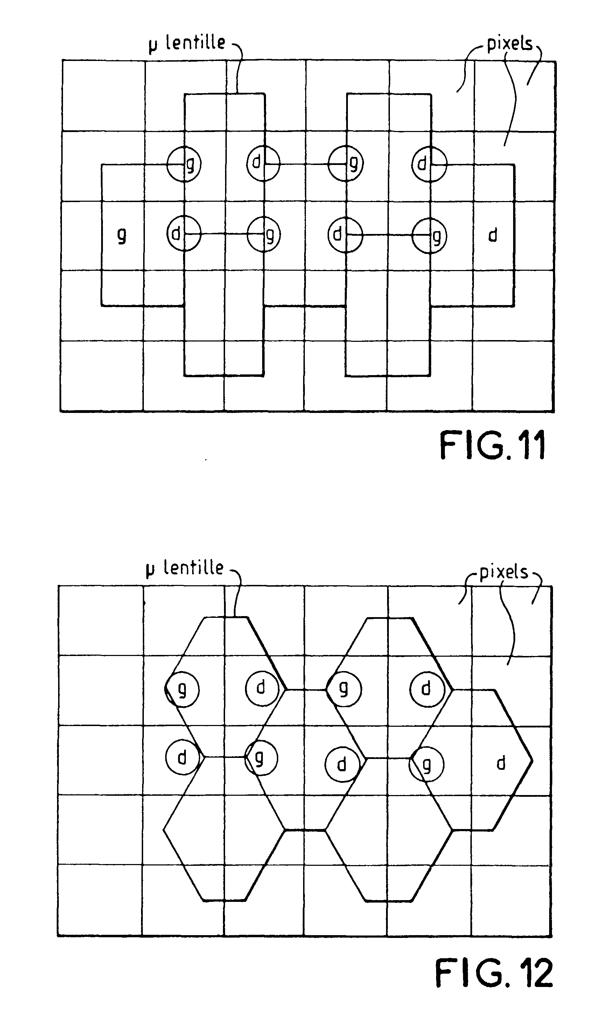

Selon les exemples de réalisations des figures 11 et 12, il est également possible de concevoir des arrangements de lentilles par rapport aux pixels de façon à ce que chaque lentille éclaire plusieurs pixels. On peut également, comme cela est représenté en figure 12 prévoir la forme des lentilles (hexagonale par exemple) pour qu'elle s'adapte à la forme circulaire de l'objectif de projection.

Le système de l'invention présente plusieurs avantages, à savoir :

* le système est optimal pour le convertisseur par polarisation et la focalisation
* la focalisation le long de l'axe horizontal ne modifie pas les valeurs de contraste car l'angle admissible horizontalement de l'affichage à cristaux liquides est assez important.

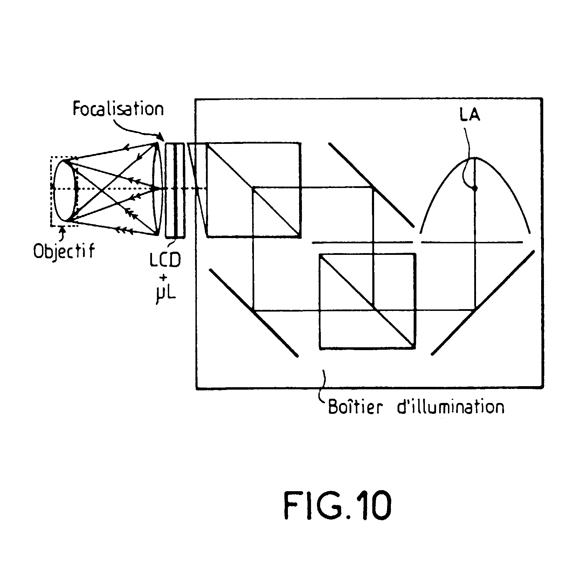

Au niveau de la sortie de ce système, nous pouvons directement utiliser ce faisceau pour éclairer l'affichage à cristaux liquides d'un projecteur monovalve ou monochrome (voir figure 10) ou pour un système à trois valves pour la projection trichrome. On trouve dans ce système, un boîtier d'illumination qui fournit deux faisceaux ainsi que décrit précédemment, l'écran LCD et le réseau de microlentilles μL.

**Revendications**

1. Un dispositif de séparation de polarisation comprenant un double prisme (DPC) constitué par un premier prisme (P1) et un second prisme (P2) comportant des faces en regard (D1, D2) et un séparateur de polarisation (FC, HOE), le premier prisme (P1) présentant une face d'entrée (A1) recevant un faisceau de lumière non-polarisée (F), ledit séparateur de polarisation transmettant la lumière polarisée selon un premier sens de polarisation et réfléchissant la lumière polarisée selon un deuxième sens de polarisation, caractérisé en ce que le second prisme comporte une face de réflexion munie d'un miroir (M3) recevant la lumière polarisée selon le deuxième sens de polarisation et réfléchie par le séparateur de polarisation, les premier et second prismes étant positionnés mutuellement pour fonctionner sur le principe de la réflexion totale interne et comportant une face de sortie transmettant la lumière transmise par le séparateur de polarisation et la lumière réfléchie par le miroir.

2. Dispositif selon la revendication 1, caractérisé en ce que le séparateur de polarisations (FC) est un filtre cholestérique situé sur la face de sortie (A2) du double prisme (DPC).

3. Dispositif selon la revendication 1, caractérisé en ce que le séparateur de polarisations (HOE) est un séparateur holographique ou un filtre cholestérique situé entre les deux faces communes des deux demi-prismes.

4. Dispositif selon l'une des revendications 2 ou 3, caractérisé en ce que la face de sortie (A2) est adjacente à la face d'entrée (A1) et en ce que la face de réflexion (A3) est opposée à la face de sortie (A2).

5. Dispositif selon l'une des revendications 2 ou 3, caractérisé en ce que la face de sortie (A2) est opposée à la face d'entrée (A1) et en ce que la face de réflexion (A3) est adjacente aux faces d'entrée et de sortie.

6. Dispositif selon la revendication 3, caractérisé en ce que la face de réflexion (A3) comporte une lame quart d'onde, la lumière du premier sens de polarisation transmise par le séparateur holographique étant transmise à une autre face de réflexion supplémentaire (A4) qui réfléchit la lumière vers la face de sortie (A2) par l'intermédiaire du dioptre de séparation des demi-cubes.

7. Dispositif selon la revendication 4, caractérisé en ce que la face de sortie (A2) n'est pas parallèle à la face de réflexion (A3).

8. Dispositif selon la revendication 5, caractérisé en ce que la face de réflexion (A3) n'est pas perpendiculaire à la face de sortie (A2).

9. Dispositif selon la revendication 5, caractérisé en ce que les prismes (P1, P2) du double prisme ne sont pas isocèles.

10. Dispositif selon la revendication 9, caractérisé en ce que l'angle d'incidence du faisceau de lumière non polarisée est différent de zéro degré.

11. Dispositif selon la revendication 6, caractérisé en ce que la face de réflexion supplémentaire (A4) fait un angle différent de 90° avec la face de sortie (A2).

12. Dispositif selon la revendication 7, caractérisé en ce que l'angle entre la face de sortie (A2) et la face de réflexion (A3) est obtenu à l'aide d'un prisme supplémentaire (P3) additionné à l'un des prismes du double prisme (DPC) ou à l'aide d'un prisme remplissant la même fonction.

13. Dispositif selon la revendication 8, caractérisé en ce que la face de réflexion comporte un miroir rétroréfléchissant (MR).

14. Dispositif selon la revendication 13, caractérisé en ce que la face de réflexion comporte un dispositif de rotation de polarisation de λ/4.

15. Dispositif selon la revendication 1, caractérisé en ce qu'il comporte une série de double-prismes juxtaposés, les faces d'entrée des différents doubles-prismes étant dans un même premier plan et les faces de sortie des différents doubles-prismes étant dans un même deuxième plan.

16. Dispositif selon la revendication 15, caractérisé en ce qu'il comporte deux plaques transparentes dentelées (P5, P6), emboîtées l'une dans l'autre par leurs dentures, chaque dent possédant une face perpendiculaire au plan de la plaque et une face inclinée, les faces perpendiculaires de l'une des plaques au moins étant réfléchissantes.

17. Dispositif selon la revendication 16, caractérisé en ce qu'une face plane d'une plaque (P6) opposée à la face dentelée est munie d'un filtre de polarisation.

18. Système d'éclairement d'un écran à cristal liquide comportant :

   - une source lumineuse émettant un faisceau de lumière non-polarisée (F) ;
   - un dispositif séparateur de polarisations (PBS) selon l'une quelconque des revendications précédentes, recevant ce faisceau de lumière non-polarisée et retransmettant vers l'écran à cristal liquide un premier et deuxième faisceaux (F1, F2), polarisés selon une même direction de polarisation, les axes des deux faisceaux faisant un angle déterminé (2β) ;
   - une matrice de microlentilles à raison d'une microlentille (μL) pour au moins deux éléments images (EL1, EL2) voisins de l'écran à cristal liquide, chaque microlentille dirigeant la partie du premier faisceau qu'elle reçoit sur un des deux éléments images (EL1) et la partie du deuxième faisceau qu'elle reçoit sur l'autre élément image (EL2).

19. Système selon la revendication 18, caractérisé en ce que l'écran (LCD) est dans le plan focal des microlentilles (μL).

20. Système selon la revendication 18, caractérisé en ce que les microlentilles (μL) sont sphériques.

21. Système selon la revendication 18, caractérisé en ce que les microlentilles (μL) sont cylindriques et permettent d'éclairer chacune des rangées d'éléments images.

22. Système selon la revendication 18, caractérisé en ce que le dispositif séparateur de polarisation (PBS) comporte un séparateur de polarisations (PBS) séparant spatialement la lumière de la source en deux faisceaux (F1, F2) polarisés différemment, au moins un réflecteur associé (M1, M2) à un trajet d'un faisceau (F1, F2), un recombineur de faisceau (DPC) recevant les deux faisceaux et les transmettant à l'écran (LCD).

23. Système selon la revendication 18, caractérisé en ce qu'il comporte deux réflecteurs (M1, M2) associés chacun au trajet d'un faisceau (F1, F2).

24. Système selon l'une des revendications 22 ou 23, caractérisé en ce que les réflecteurs (M1, M2) sont orientables.

25. Système selon la revendication 22, caractérisé en ce qu'il comporte un dispositif de rotation de polarisation (λ/2) disposé sur le trajet de l'un des faisceaux (F1 ou F2).

**Patentansprüche**

1. Vorrichtung zur Polarisationstrennung mit einem Doppelprisma (DPC), das durch ein erstes Prisma (P1) und ein zweites Prisma (P2) gebildet ist, die einander gegenüberliegende Flächen (D1, D2) und einen Polarisationstrenner (FC, HOE) aufweisen, wobei das erste Prisma (P1) eine das nicht-polarisierte Lichtbündel (F) empfangende Eingangsfläche (A1) darstellt, der Polarisationstrenner das polarisierte Licht in einer ersten Polarisationsrichtung überträgt und das polarisierte Licht in einer zweiten Polarisationsrichtung reflektiert, dadurch gekennzeichnet, daß das zweite Prisma eine mit einem Spiegel (M3) versehene Reflexionsfläche aufweist, die das in der zweiten Polarisationsrichtung polarisierte und durch den Polarisationstrenner reflektierte Licht empfängt, daß das erste und das zweite Prisma beidseitig angeordnet sind, um dadurch nach dem Prinzip der totalen inneren Reflexion zu arbeiten, und eine Ausgangsfläche aufweist, die das von dem Polarisationstrenner übertragene Licht und das durch den Spiegel reflektierte Licht überträgt.

2. Vorrichtung nach Anspruch 1, dadurch gekennzeichnet, daß der Polarisationstrenner (FC) ein cholesterinisches Filter ist, das auf der Ausgangsfläche (A2) des Doppelprismas (DPC) angeordnet ist.

3. Vorrichtung nach Anspruch 1, dadurch gekennzeichnet, daß der Polarisationstrenner (HOE) ein holographischer Trenner oder ein cholesterinisches Filter ist, das zwischen den beiden gemeinsamen Flächen der beiden Halbprismen liegt.

4. Vorrichtung nach einem der Ansprüche 2 oder 3, dadurch gekennzeichnet, daß die Ausgangsfläche (A3) neben der Eingangsfläche (A1) liegt und daß die Reflexionsfläche (A3) der Ausgangsfläche (A2) gegenüberliegt.

5. Vorrichtung nach einem der Ansprüche 2 oder 3, dadurch gekennzeichnet, daß die Ausgangsfläche (A2) der Eingangsfläche (A1) gegenüberliegt und daß die Reflexionsfläche (A3) an der Eingangsfläche und an der Ausgangsfläche liegt.

6. Vorrichtung nach Anspruch 3, dadurch gekennzeichnet, daß die Reflexionsfläche (A3) eine Platte mit einer viertel Wellenlänge enthält, daß das durch den holographischen Trenner übertragene Licht der ersten Polarisationsrichtung zu einer anderen, zusätzlichen Reflexionsfläche (A4) übertragen wird, die das Licht über die die Halbwürfel trennende optische Grenzschicht auf die Ausgangsfläche (A2) reflektiert.

7. Vorrichtung nach Anspruch 4, dadurch gekennzeichnet, daß die Ausgangsfläche (A2) nicht parallel zu der Reflexionsfläche (A3) liegt.

8. Vorrichtung nach Anspruch 5, dadurch gekennzeichnet, daß die Reflexionsfläche (A3) nicht senkrecht zu der Ausgangsfläche (A2) liegt.

9. Vorrichtung nach Anspruch 5, dadurch gekennzeichnet, daß die Prismen (P1, P2) des Doppelprismas nicht gleichschenkelig sind.

10. Vorrichtung nach Anspruch 9, dadurch gekennzeichnet, daß der Einfallswinkel des nicht-polarisierten Lichtbündels von null Grad abweicht.

11. Vorrichtung nach Anspruch 6, dadurch gekennzeichnet, daß die zusätzliche Reflexionsfläche (A4) mit der Ausgangsfläche (A2) einen von 90° abweichenden Winkel bildet.

12. Vorrichtung nach Anspruch 7, dadurch gekennzeichnet, daß der Winkel zwischen der Ausgangsfläche (A2) und der Reflexionsfläche (A3) durch ein zusätzliches Prisma (P3), das einem der Prismen des Doppelprismas (DPC) hinzugefügt ist, oder durch ein diese Funktion ausübendes Prisma gebildet ist.

13. Vorrichtung nach Anspruch 8, dadurch gekennzeichnet, daß die Reflexionsfläche einen reflektierenden Spiegel (MR) enthält.

14. Vorrichtung nach Anspruch 13, dadurch gekennzeichnet, daß die Reflexionsfläche eine Vorrichtung zur Drehung der Polarisation um $\lambda/4$ enthält.

15. Vorrichtung nach Anspruch 1, dadurch gekennzeichnet, daß sie eine Reihe von nebeneinander liegenden Doppelprismen enthält, daß die Eingangsflächen der verschiedenen Doppelprismen in derselben ersten Ebene liegen und daß die Ausgangsflächen der verschiedenen Doppelprismen in derselben zweiten Ebene liegen.

16. Vorrichtung nach Anspruch 15, dadurch gekennzeichnet, daß sie zwei zahnförmige transparente Platten (P5, P6) aufweist, die mit ihren Verzahnungen ineinandergreifen, daß jeder Zahn eine zu der Ebene der Platte senkrechte Fläche und eine geneigte Fläche aufweist und daß die zu wenigstens einer der Platten senkrechten Flächen reflektierend ausgebildet sind.

17. Vorrichtung nach Anspruch 16, dadurch gekennzeichnet, daß eine zu der zahnförmigen Fläche gegenüberliegende ebene Fläche einer Platte (P6) mit einem Polarisationsfilter versehen ist.

18. Beleuchtungssystem für einen Flüssigkristallschirm, enthaltend:

    - eine ein nicht-polarisiertes Lichtbündel (F) aussendende Lichtquelle,
    - eine Polarisations-Trennvorrichtung (PBS) nach einem der vorangehenden Ansprüche, die das nicht-polarisierte Lichtbündel empfängt und zu dem Flüssigkristallschirm zurücküberträgt,
    - ein erstes und ein zweites Lichtbündel (F1, F2), die in derselben Polarisationsrichtung polarisiert sind, wobei die Achsen der beiden Lichtbündel einen bestimmten Winkel ($2\beta$) bilden,
    - eine Matrix mit Mikrolinsen mit einer Mikrolinse ($\mu$L) für wenigstens zwei benachbarte Bildelemente (EL1, EL2) des Flüssigkristallschirms, wobei jede Mikrolinse den Teil des ersten Lichtbündels, den sie empfängt, auf die beiden Bildelemente (EL1) richtet, und den Teil des zweiten Lichtbündels, den sie empfängt, auf das andere Bildelement (EL2) richtet.

19. System nach Anspruch 18, dadurch gekennzeichnet, daß der Schirm (LCD) in der Brennpunktebene der Mikrolinsen ($\mu$L) liegt.

20. System nach Anspruch 18, dadurch gekennzeichnet, daß die Mikrolinsen ($\mu$L) kugelförmig sind.

21. System nach Anspruch 18, dadurch gekennzeichnet, daß die Mikrolinsen ($\mu$L) zylinderförmig sind und die Beleuchtung jeder von zwei Reihen von Bildelementen ermöglichen.

22. System nach Anspruch 18, dadurch gekennzeichnet, daß die Vorrichtung zur Polarisationstrennung einen Polarisationstrenner (PBS) enthält, der das Licht der Quelle räumlich in zwei unterschiedlich polarisierte Lichtbündel (F1, F2) trennt, das wenigstens ein Reflektor (M1, M2) für einen Lichtbündelverlauf (F1, F2) und eine Lichtbündel-Kombiniereinheit (DPC) vorgesehen sind, die die beiden Lichtbündel empfängt und sie zu dem Schirm (LCD) überträgt.

23. System nach Anspruch 18, dadurch gekennzeichnet, daß es zwei Reflektoren (M1, M2) enthält, die jeweils einem Lichtbündelverlauf (F1, F2) zugeordnet sind.

24. System nach einem der Ansprüche 22 oder 23, dadurch gekennzeichnet, daß die Reflektoren (M1, M2) einstellbar sind.

25. System nach Anspruch 22, dadurch gekennzeichnet, daß das System eine Vorrichtung zur Drehung der Polarisation (λ/2) für den Verlauf eines der Lichtbündel (F1, F2) aufweist.

## Claims

1. A polarizing splitter device comprising a double prism (DPC) consisting of a first prism (P1) and a second prism (P2) having opposing faces (D1, D2) and a polarizing splitter (CF, HOE), the first prism (P1) having an entry face (A1) receiving a beam (F) of unpolarized light, the said polarizing splitter transmitting the polarized light in a first polarization direction and reflecting the polarized light in a second polarization direction, characterized in that the second prism has a reflection face provided with a mirror (M3) receiving the light polarized in the second polarization direction and reflected by the polarizing splitter, the first and second prisms being mutually positioned in order to function on the principle of total internal reflection, and having an exit face transmitting the light transmitted by the polarizing splitter and the light reflected by the mirror.

2. Device according to Claim 1, characterized in that the polarizing splitter (CF) is a cholesteric filter located on the exit face (A2) of the double prism (DPC).

3. Device according to Claim 1, characterized in that the polarizing splitter (HOE) is a holographic splitter or a cholesteric filter located between the two common faces of the two half-prisms.

4. Device according to either of Claims 2 and 3, characterized in that the exit face (A2) is adjacent to the entry face (A1) and in that the reflection face (A3) is opposite the exit face (A2).

5. Device according to either of Claims 2 and 3, characterized in that the exit face (A2) is opposite the entry face (A1) and in that the reflection face (A3) is adjacent to the entry and exit faces.

6. Device according to Claim 3, characterized in that the reflection face (A3) includes a quarter-wave plate, the light in the first polarization direction, transmitted by the holographic splitter, being transmitted to another additional reflection face (A4) which reflects the light onto the exit face (A2) via the dioptric interface which separates the half-cubes.

7. Device according to Claim 4, characterized in that the exit face (A2) is not parallel to the reflection face (A3).

8. Device according to Claim 5, characterized in that the reflection face (A3) is not perpendicular to the exit face (A2).

9. Device according to Claim 5, characterized in that the prisms (P1, P2) of the double prism are not isosceles.

10. Device according to Claim 9, characterized in that the angle of incidence of the unpolarized light beam is different from zero degrees.

11. Device according to Claim 6, characterized in that the additional reflection face (A4) makes an angle other than 90° with the exit face (A2).

12. Device according to Claim 7, characterized in that the angle between the exit face (A2) and the reflection face (A3) is obtained by the use of an additional prism (P3) added to one of the prisms of the double prism (DPC) or by the use of a prism fulfilling the same function.

13. Device according to Claim 8, characterized in that the reflection face includes a retroreflective mirror (RM).

14. Device according to Claim 13, characterized in that the reflection face includes a λ/4 polarization-rotation device.

15. Device according to Claim 1, characterized in that it includes a series of juxtaposed double prisms, the entry faces of the various double prisms lying in the same first plane and the exit faces of the various double prisms lying in the same second plane.

16. Device according to Claim 15, characterized in that it includes two transparent dentate plates (P5, P6) which fit together by their toothing, each tooth having a face perpendicular to the plane of the plate and an inclined face, the perpendicular faces of one of the plates at least being reflective.

17. Device according to Claim 16, characterized in that a plane face of one plate (P6) opposite the dentate face is provided with a polarizing filter.

18. System for illuminating a liquid-crystal screen comprising:

   - a light source emitting an unpolarized light beam (F);
   - a polarizing splitter device (PBS) according to any one of the preceding claims, receiving this unpolarized light beam and retransmitting, onto the liquid-crystal screen, a first and a second beam (F1, F2) which are polarized in the same polarization direction, the axes of the two beams making a defined angle (2β);
   - a matrix of microlenses with one microlens (μL) for at least two adjacent picture elements (EL1, EL2) in the liquid-crystal screen, each microlens directing that part of the first beam which it receives onto one (EL1) of the two picture elements and that part of the second beam which it receives onto the other picture element (EL2).

19. System according to Claim 18, characterized in that the screen (LCD) lies in the focal plane of the microlenses (μL)

20. System according to Claim 18, characterized in that the microlenses (μL) are spherical.

21. System according to Claim 18, characterized in that the microlenses (μL) are cylindrical and each enables two rows of picture elements to be illuminated.

22. System according to Claim 18, characterized in that the polarizing splitter device (PBS) includes a polarizing splitter (PBS) which spatially separates the light from the source into two beams (F1, F2) which are differently polarized, at least one reflector (M1, M2) associated with a path of one beam (F1, F2), and a beam recombiner (DPC) receiving the two beams and transmitting them onto the screen (LCD).

23. System according to Claim 18, characterized in that it includes two reflectors (M1, M2) each associated with the path of one beam (F1, F2).

24. System according to either of Claims 22 and 23, characterized in that the reflectors (M1, M2) are orientable.

25. System according to Claim 22, characterized in that it includes a (λ/2) polarization-rotation device arranged in the path of one (F1 or F2) of the beams.

FIG.1a

FIG.1b

FIG.1c

FIG.1d

EP 0 740 477 B1

FIG.1e

FIG.1f

FIG.2

Lumière non polarisée

Lumière polarisée

M3

air

n

θ1

θ1

n

n

M3

n

α

FC

F1

F2

F

EP 0 740 477 B1

FIG.3

FIG.4a

FIG.4b

FIG.5a

FIG.5b

$n1 \sin(\theta1) = n2 \sin(\theta2)$

$n2 \sin(\theta2) = n3 \sin(\theta3)$

$\theta1 + \beta v < Ar \sin(n2/n1)$

$\alpha3 + \beta v > Ar \sin(n2/n3)$

EP 0 740 477 B1

FIG.6b

$n1 \sin(\theta1) = n2 \sin(\theta2)$

$n2 \sin(\theta2) = n3 \sin(\theta3)$

$\theta1 + \beta v < Ar \sin(n2/n1)$

$\alpha3 + \beta v > Ar \sin(n2/n3)$

FIG.6a

EP 0 740 477 B1

FIG.7a

FIG.7b

EP 0 740 477 B1

**FIG.8**

FIG.9a

FIG.9b

FIG.9c

FIG.10

µ lentille

pixels

g d g d

g d g d g

FIG.11

µ lentille

pixels

g d g d

d g d g d

FIG.12